(19) Europäisches Patentamt / European Patent Office / Office européen des brevets

(11) **EP 4 420 817 A1**

(12) **EUROPEAN PATENT APPLICATION**
published in accordance with Art. 153(4) EPC

(43) Date of publication:
28.08.2024 Bulletin 2024/35

(21) Application number: 23752712.2

(22) Date of filing: 27.01.2023

(51) International Patent Classification (IPC):
$B23K\ 11/11^{(2006.01)}$     $B23K\ 11/16^{(2006.01)}$
$B23K\ 11/24^{(2006.01)}$     $C22C\ 38/00^{(2006.01)}$
$C22C\ 38/14^{(2006.01)}$     $C22C\ 38/60^{(2006.01)}$

(52) Cooperative Patent Classification (CPC):
B23K 11/11; B23K 11/16; B23K 11/24;
C22C 38/00; C22C 38/14; C22C 38/60

(86) International application number:
PCT/JP2023/002741

(87) International publication number:
WO 2023/153247 (17.08.2023 Gazette 2023/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 08.02.2022 JP 2022017663

(71) Applicant: JFE Steel Corporation
Tokyo 100-0011 (JP)

(72) Inventors:
• KIM Jingeum
  Tokyo 100-0011 (JP)
• KAWABE Nao
  Tokyo 100-0011 (JP)
• TAKASHIMA Katsutoshi
  Tokyo 100-0011 (JP)
• MATSUDA Hiroshi
  Tokyo 100-0011 (JP)

(74) Representative: Haseltine Lake Kempner LLP
Bürkleinstrasse 10
80538 München (DE)

(54) **RESISTANCE SPOT-WELDED JOINT AND RESISTANCE SPOT WELDING METHOD**

(57)     Provided are a resistance spot welded joint and a resistance spot welding method. The present invention is a resistance spot welded joint formed by welding two or more steel sheets including at least one high strength steel sheet. The high strength steel sheet has a specific chemical composition, and the nugget diameter of a weld and the width of a softened portion of a heat-affected zone satisfy the relation of formula (2). The hardness X of a softest portion of the heat-affected zone and the hardness of the base material of the high strength steel sheet satisfy the relation of formula (3). The total average number density of NbC, TiC, VC particles having a diameter of 100 nm or less in the heat-affected zone is 80 particles/$\mu$m$^2$ or more.

Width (mm) of softened portion of heat-affected zone > diameter (mm) of nugget $\times$ 0.2,     (2)

X (HV) < hardness (HV) of base material of high strenght steel sheet $\times$ 0.95,     (3)

EP 4 420 817 A1

# FIG. 1

**Description**

Technical Field

The present invention relates to a resistance spot welded joint including overlapping steel sheets and a resistance spot welding method.

Background Art

In recent years, high strength steel sheets have been used in the field of automobiles for the purpose of reducing the weight of vehicle bodies to improve fuel efficiency and of improving the safety of the vehicle bodies in the event of a collision.

However, as the tensile strength of the steel sheets increases, there is a growing concern about a reduction in the delayed fracture resistance of the welds due to residual stress caused by welding and the presence of hydrogen that enters the welds during welding and from the use environment of the steel sheets.

Examples of a method for preventing delayed fracture of welds include methods described in Patent Literature 1 to Patent Literature 3.

Patent Literature 1 discloses a technique for preventing delayed fracture. In this technique, after the formation of a nugget by primary energization, secondary energization is performed to maintain a high-temperature environment in which hydrogen can easily diffuse so that hydrogen that has entered during welding is discharged to the outside.

Patent Literature 2 discloses a technique for improving delayed fracture resistance. In this technique, two-stage energization including primary energization for forming a nugget and subsequent secondary energization for heating is performed to soften a portion between a pressure bonded portion of the steel sheets and an edge portion of the nugget.

Patent Literature 3 discloses a technique for improving the delayed fracture resistance. In this technique, after the formation of a nugget by primary energization, secondary energization is performed while a welding electrode is controlled so as to move continuously up and down repeatedly to relax tensile residual stress.

Citation List

Patent Literature

PTL 1: Japanese Unexamined Patent Application Publication No. 2019-72764
PTL 2: International Publication No. WO2014/171495
PTL 3: Japanese Unexamined Patent Application Publication No. 2018-144098

Summary of Invention

Technical Problem

However, the technique in Patent Literature 1 is provided for reducing the amount of hydrogen entering the weld during welding, and no consideration is given to hydrogen coming from the outside in the use environment. Therefore, delayed fracture is likely to occur in the use environment of the welded joint produced.

The techniques in Patent Literature 2 and Patent Literature 3 are provided for strengthening the pressure bonded portion of the steel sheets and relaxing residual stress using heating in the secondary energization after the formation of the nugget, and no consideration is given to the influence of hydrogen, which is the main cause of delayed fracture. Therefore, delayed fracture may occur because of accumulation of hydrogen.

These techniques do not consider the influence of carbides including Nb, Ti, and V serving as trapping sites of hydrogen that is the cause of delayed fracture. By studying the relation between the carbides of these elements and the delayed fracture characteristics, it may be possible to produce better resistance spot welded joints.

The present invention has been made in view of the foregoing circumstances, and it is an object to provide a resistance spot welded joint in which the amount of hydrogen entering from a use environment after welding can be reduced to thereby prevent delayed fracture of the welded joint in the use environment and to provide a resistance spot method. Solution to Problem

The present inventors have conducted studies on the behavior of hydrogen that enters from the use environment and causes delayed fracture in order to prevent the delayed fracture of a resistance spot welded joint obtained by resistance-spot-welding two or more steel sheets including at least one high strength steel sheet and have obtained the following findings.

The resistance spot weld includes a heat-affected zone formed around a nugget, and the phase and microstructure of the heat-affected zone vary with the distance from the edge of the nugget. Therefore, when hydrogen enters the resistance spot weld from the external environment, the hydrogen must pass through the heat-affected zone in order to reach the edge of the nugget, which is the main fracture origin of the resistance spot weld. The hydrogen passing through the heat-affected zone is accumulated at the edge of the nugget at which residual stress caused by welding is concentrated, and this causes delayed fracture. Therefore, one effective way to prevent delayed fracture is to reduce the amount of hydrogen passing through the heat-affected zone and entering the nugget and to reduce the amount of hydrogen accumulated at the edge of the nugget.

Accordingly, the inventors have examined resistance spot welding methods with which the amount of hydrogen entering the edge of the nugget from the external environment can be reduced and also examined welded joints produced by these methods.

First, the inventors have found that, when carbides are densely precipitated in the heat-affected zone of a resistance spot weld, hydrogen entering from the outside is trapped in advance and the delayed fracture resistance of the resistance spot welded joint is improved. Moreover, when the chemical composition of a high strength steel sheet used for welding contains Nb, Ti, and V, NbC, TiC, and VC are precipitated in the heat-affected zone. In this case, the delayed fracture resistance of the resistance spot welded joint can be improved by performing only secondary energization for a shorter time without a reduction in strength.

It has also been found that, by setting the relation between the hardness of the heat-affected zone of the resistance spot weld and the hardness of the base material of the high strength steel sheet such that the hardness X (HV) of a softest portion of the heat-affected zone < the hardness of the base material of the high strength steel sheet (HV) × 0.95, the residual stress caused by welding is relaxed and the delayed fracture is prevented.

It has been found that the resistance spot welded joint having the above characteristics can be obtained by performing secondary energization under specific welding conditions after primary energization for forming the nugget and then appropriately tempering the heat-affected zone.

The present invention has been made based on the above findings and summarized as follows.

[1] A resistance spot welded joint including a weld formed by resistance-spot-welding a sheet set including two or more overlapping steel sheets including at least one high strength steel sheet,

wherein the high strength steel sheet has a chemical composition containing, in mass %,

C: 0.10 to 0.40%,
Si: 0.10 to 2.50%,
Mn: 1.0 to 5.0%,
P: 0.020% or less,
S: less than 0.010%,
Al: 0.10% or less, and
N: 0.010% or less, and

further containing
one or two or more selected from

Nb: 0.10% or less,
Ti: 0.10% or less, and
V: 0.20% or less,

with the balance being Fe and incidental impurities,
wherein Nb, Ti, and V satisfy a relation of formula (1),
wherein the weld includes a nugget and a heat-affected zone,
wherein, when a region in the heat-affected zone that has a hardness equal to or less than a hardness of a base material of the high strength steel sheet is defined as a softened portion, a diameter of the nugget and a width of the softened portion of the heat-affected zone satisfy a relation of formula (2),
wherein, when a hardness of a softest portion of the heat-affected zone is denoted by X, the hardness X of the softest portion and the hardness of the base material of the high strength steel sheet satisfy a relation of formula (3), and
wherein a total average number density of NbC, TiC, and VC particles having a diameter of 100 nm or less and present in the heat-affected zone is 80 particles/$\mu$m² or more:

$$([Nb] + [Ti] + [V] / 5) \geq 0.01\%, \qquad (1)$$

$$\text{Width (mm) of softened portion of heat-affected zone} > \text{diameter (mm) of nugget} \times 0.2, \qquad (2)$$

$$X \text{ (HV)} < \text{hardness (HV) of base material of high strenght steel sheet} \times 0.95, \qquad (3)$$

where element symbols in formula (1) represent the contents (% by mass) of respective elements in the high strength steel sheet, and the content of an element is 0 when the element is not contained.

[2] The resistance spot welded joint according to [1], wherein the chemical composition contains one or two or more selected from Nb: 0.08% or less, Ti: 0.08% or less, and V: 0.16% or less, and wherein a lower limit of formula (1) is 0.04%.

[3] The resistance spot welded joint according to [1] or [2], wherein the high strength steel sheet further contains, in mass %, one or two or more selected from

Mo: 0.500% or less,
Cr: 0.300% or less,
Ca: 0.0200% or less,
Sb: 0.200% or less,
B: 0.0100% or less,
Cu: 1.00% or less, and
Ni: 0.50% or less, in addition to the chemical composition.

[4] The resistance spot welded joint according to any one of [1] to [3], wherein the high strength steel sheet includes a metal coated layer.

[5] The resistance spot welded joint according to any one of [1] to [4], wherein the high strength steel sheet has a tensile strength of 980 MPa or more.

[6] A resistance spot welding method for producing the resistance spot welded joint according to any one of [1] to [5], the method including: holding, between a pair of welding electrodes, the sheet set including the two or more overlapping steel sheets including the at least one high strength steel sheet; and energizing the sheet set under application of welding force to join the steel sheets together,

wherein the energizing includes a primary energization step and a secondary energization step,
wherein the method further includes a cooling step between the primary energization step and the secondary energization step,
wherein, in the secondary energization step, energization is performed with a welding force F2 of 2.0 to 7.0 kN at a current value $I_2$ that satisfies a relation of formula (4) with a current value $I_1$ in the primary energization step for an energization time $t_2$ represented by formula (5):

$$0.6 \times I_1 < I_2 < 1.0 \times I_1, \qquad (4)$$

$$2100 - 8200 \times ([Nb] + [Ti] + [V] / 5) < t_2, \qquad (5)$$

wherein, in formulas (4) and (5),

$I_1$: the current value (kA) in the primary energization step,
$I_2$: the current value (kA) in the secondary energization step, and
$t_2$: the energization time (ms) in the secondary energization step,

wherein element symbols in formula (5) represent the contents (% by mass) of respective elements in the high strength steel sheet, and the content of an element is 0 when the element is not contained, and wherein, when the at least one high strength steel sheet includes two or more high strength steel sheets, the value of ([Nb] + [Ti] + [V] / 5) in formula (5) is an average of values calculated for the two or more high strength steel sheets.

[7] The resistance spot welding method according to [6], wherein, in the cooling step, a non-energization state is maintained for 500 ms or longer and shorter than 2000 ms. Advantageous Effects of Invention

According to the present invention, in the resistance spot welded joint obtained by resistance-spot-welding the two or more steel sheets including the at least one high strength steel sheet, the amount of hydrogen entering from a use environment can be reduced to thereby suppress delayed fracture of the welded joint, so that industrially significant effects are obtained.

Brief Description of Drawings

[Fig. 1] Fig. 1 is a cross-sectional view schematically showing a resistance spot weld of the resistance spot welded joint of the invention and the vicinity of the resistance spot weld.
[Fig. 2] Fig. 2 is a graph showing the relation between the Vickers hardness and the distance from the edge of a nugget in the resistance spot weld shown in Fig. 1 and the vicinity thereof.
[Fig. 3] Fig. 3 is a cross-sectional view schematically showing an example of the resistance spot welding method of the present invention.
[Fig. 4] Fig. 4 is a graph showing an example of an energization pattern and a pressurizing pattern in the resistance spot welding method of the invention.
[Fig. 5] Figs. 5(A) and 5(B) are illustrations showing a resistance spot welded test specimen in an Example of the invention, Fig. 5(A) being a plan view, Fig. 5(B) being a side view.

Description of Embodiments

Referring next to the drawings, the invention will be described. However, the invention is not limited to the following embodiments.

[Resistance spot welded joint]

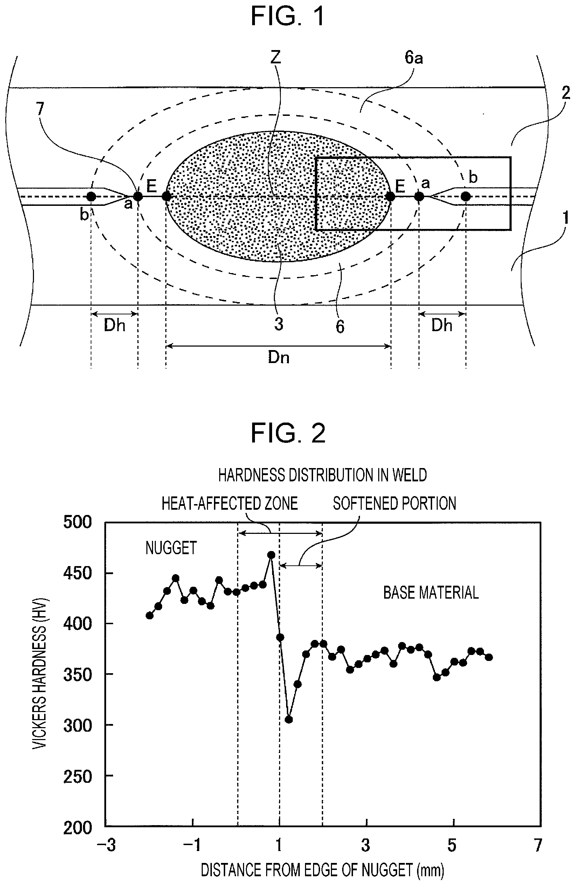

Referring first to Fig. 1, the resistance spot welded joint of the invention will be described. Fig. 1 shows, as an example, a cross-sectional view of a resistance spot weld (which may be hereinafter referred to also as a "weld") of the resistance spot welded joint of the invention (which may be hereinafter referred to also as the "welded joint") and the vicinity thereof, the cross-sectional view being taken in the thickness direction.
The present invention is the welded joint including a weld formed by resistance-spot-welding two or more overlapping steel sheets. The overlapping steel sheets include at least one steel sheet having a tensile strength of 980 MPa or more described later (i.e., at least one high strength steel sheet). No particular limitation is imposed on the upper limit of the number of overlapping steel sheets, but the number of overlapping steel sheets is preferably 4 or less. As described later, the high strength steel sheet has a specific chemical composition, and Nb, Ti, and V satisfy the relation of formula (1).
In the example shown in Fig. 1, the welded joint is formed by resistance-spot-welding a sheet set including two overlapping steel sheets, and the high strength steel sheet is applied to a steel sheet 1 disposed on the lower side and/or a steel sheet 2 disposed on the upper side. As described later, the high strength steel sheet may include a metal coated layer. However, in Fig. 1, the illustration of the metal coated layer is omitted. A weld described below is formed at a steel sheet faying surface (hereinafter referred to as a "faying surface") 7 at which the steel sheets 1 and 2 are in contact with each other.

[Resistance spot weld]

The weld of the welded joint of the invention will be described.
As shown in Fig. 1, the weld of the welded joint includes a nugget 3 and a heat-affected zone (HAZ) 6 formed around the outer periphery of the nugget 3. In the heat-affected zone 6, the phase and microstructure vary with the distance from the edge of the nugget 3. As shown in Fig. 1, the heat-affected zone 6 includes a softened portion 6a formed therein.
In the weld in the present invention, the nugget diameter Dn (i.e., the diameter of the nugget 3) (mm) and the width Dh (mm) of the softened portion 6a of the heat-affected zone 6 satisfy the relation of formula (2). When the hardness of a softest portion of the heat-affected zone 6 is denoted by X (HV), the hardness X of the softest portion and the hardness (HV) of the base material of the high strength steel sheet satisfy the relation of formula (3). Moreover, the total average number density of NbC, TiC, and VC particles having a diameter of 100 nm or less in the heat-affected zone 6 is 80 particles/$\mu$m$^2$ or more.

$$\text{Width (mm) of softened portion of heat-affected zone} > \text{diameter (mm) of nugget} \times 0.2, \qquad (2)$$

$$X \text{ (HV)} < \text{hardness (HV) of base material of high strenght steel sheet} \times 0.95, \qquad (3)$$

For example, when the high strength steel sheet in the invention is applied to all the overlapping steel sheets, it is necessary that all the high strength steel sheets satisfy the relations of formulas (2) and (3) and that the average value of the average number densities of the NbC, TiC, and VC particles in all the high strength steel sheets be within the above numerical range. In this case, the effects of the invention can be obtained.

[Relation between nugget diameter Dn and width Dh of softened portion 6a of heat-affected zone 6]

As shown in Fig. 1, the "nugget diameter Dn (mm)" is the length of a straight line connecting two edges E-E of the nugget (i.e., a line Z shown in Fig. 1), where the edges E of the nugget are the intersections of the outer edge of the nugget 3 and the faying surface 7. The "heat-affected zone 6" is a region formed around the nugget 3, subjected to quenching and tempering under the influence of the heat for melting, and having a microstructure that is different from the microstructure of the base material and is distinguishable therefrom by etching a cross section of the weld. The "width Dh (mm) of the softened portion 6a of the heat-affected zone 6" is the length of a straight line connecting two points at which an extension of the straight line Z and the boundaries of the softened portion 6a (i.e., the inner and outer circumferential edges of the softened portion 6a) intersect (i.e., points a and b shown in Fig. 1).

The nugget diameter Dn and the width Dh of the softened portion 6a of the heat-affected zone 6 (hereinafter may be referred to also as the "width Dh of the softened portion 6a") satisfy the relation of formula (2). When the softened portion 6a is formed such that the width Dh satisfies formula (2), a larger amount of hydrogen entering from the external environment can be trapped. If the width Dh (mm) of the softened portion 6a is equal to or less than (the nugget diameter Dn × 0.2) (mm), the amount of trapping sites capable of trapping hydrogen moving toward the nugget 3 is insufficient, and the amount of hydrogen entering the nugget 3 and causing delayed fracture cannot be sufficiently reduced. Therefore, the width Dh of the softened portion 6a is set to be more than (the nugget diameter Dn × 0.2) (mm). The width Dh of the softened portion 6a is preferably more than (the nugget diameter Dn × 0.22) (mm), more preferably more than (the nugget diameter Dn × 0.25) (mm), and still more preferably more than (the nugget diameter Dn × 0.3) (mm) .

No particular limitation is imposed on the upper limit of the width Dh of the softened portion 6a. However, if the energization time in the secondary energization step is increased in order to ensure the width Dh of the softened portion 6a, excessive tempering may cause a reduction in the strength of the heat-affected zone 6. Therefore, the width Dh of the softened portion 6a is preferably equal to or less than (the nugget diameter Dn × 0.5) (mm). More preferably, the width Dh of the softened portion 6a is equal to or less than (the nugget diameter Dn × 0.48) (mm).

The "width Dh of the softened portion 6a of the heat-affected zone 6" in formula (2) is the width Dh of one of the softened portions 6a formed on the opposite sides of the nugget 3 as shown in Fig. 1.

[Relation between hardness X of softest portion of heat-affected zone 6 and hardness of base material of high strength steel sheet]

Fig. 2 shows the relation between the distance from an edge E of the nugget and the Vickers hardness in a region including part of the weld and the periphery thereof and surrounded by a rectangular frame in Fig. 1. In the graph in Fig. 2, the horizontal axis represents the "distance (mm) from the edge of the nugget" with the edge E of the nugget as the point of reference, and the vertical axis represents the "Vickers hardness (HV)" at a measurement point. Negative values on the horizontal axis indicate distances from the edge E of the nugget toward the center of the nugget 3, and positive values indicate distances from the edge E of the nugget toward the base material of the steel sheets. The Vickers hardness is measured according to JIS Z 2244 (2020).

Specifically, as described later in Examples, the Vickers hardness is measured at points spaced at 0.2 mm intervals on a straight line parallel to the faying surface 7 of the high strength steel sheet and located 0.2 mm above the faying surface 7 under the condition that an indenter load of 300 gf is maintained for 15 seconds. The measurement region is a region extending 7.0 mm from the center of nugget 3 toward the base material of the high strength steel sheet. The measurement is performed in the melted portion and the base material on the high strength steel sheet side in the invention.

As shown in Figure 2, the "softened portion 6a of the heat-affected zone 6" is a region in the heat-affected zone 6 in which the Vickers hardness measured according to JIS Z 2244 (2020) is equal to or less than the average Vickers hardness of the base material of the high strength steel sheet, and the "hardness X of the softest portion" is the minimum Vickers hardness value it this region. In other words, the hardness X of the softest portion is the hardness of a region with the lowest hardness within the entire heat-affected zone 6. The "average Vickers hardness of the base material of the high strength steel sheet" is the average of five measurements of the hardness of the base material of the high strength steel sheet under the above measurement conditions.

In the present invention, it is important that the hardness X of the softest portion of the heat-affected zone 6 and the hardness of the base material of the high strength steel sheet satisfy the relation of formula (3) and that the width Dh of the softened portion 6a satisfy formula (2).

When the hardness X of the softest portion of the heat-affected zone 6 satisfies the relation of formula (3), the effect of improving the delayed fracture resistance of the nugget 3 by hydrogen trapping in the heat-affected zone 6 and the effect of improving the joint strength by the secondary energization step described later can be expected. If the hardness X (HV) of the softest portion of the heat-affected zone 6 is equal to or more than (the hardness of the base material $\times$ 0.95) (HV), the tempering effect imparted to the heat-affected zone 6 is insufficient because of overheating. Therefore, the hardness X of the softest portion is set to be less than (the hardness of the base material $\times$ 0.95) (HV). The hardness X of the softest portion is preferably less than (the hardness of the base material $\times$ 0.90) (HV) and more preferably less than (the hardness of the base material $\times$ 0.85) (HV).

If excessive heat is applied to obtain sufficient hardness, the strength of the heat-affected zone cannot be ensured. Therefore, the lower limit of the hardness X of the softest portion is set to (the hardness of the base material $\times$ 0.40) (HV). The hardness X of the softest portion is preferably equal to or more than (the hardness of the base material $\times$ 0.45) (HV).

The hardness X of the softest portion in relation to the hardness of the nugget 3 is preferably X (HV) < (the average hardness of the nugget $3 \times 0.9$) (HV). This is because, if this relation is not satisfied, the softened portion 6a is excessively hard and the heat-affected zone may undergo delayed fracture even when the residual stress is within the allowable range for the nugget. The "average hardness of the nugget 3" is the average of five measurements of the hardness of the nugget 3 under the above measurement conditions.

[Carbides in heat-affected zone]

In the present invention, it is also important to cause carbides to precipitate at high density in the heat-affected zone 6 of the weld as described above. Specifically, the total average number density of NbC, TiC, and VC particles having a diameter of 100 nm or less in the heat-affected zone 6 is 80 particles/$\mu m^2$ or more.

Nb, Ti, and V contained in the high strength steel sheet in the invention form carbides NbC, TiC, and VC in the heat-affected zone 6 by resistance spot welding performed under the welding conditions described later. The carbides in the heat-affected zone 6 trap hydrogen entering from the external environment, and the amount of hydrogen accumulated at the edge of the nugget is reduced, so that delayed fracture is prevented.

When the diameters of the NbC, TiC, and VC particles formed are more than 100 nm, the degree of tempering performed must be excessively high so that the surface area of the precipitated carbides is large enough to trap the hydrogen entering the nugget 3. In this case, the joint strength decreases. For this reason, the diameters of the NbC, TiC, and VC particles are set to be 100 nm or less.

If the total average number density of the carbides formed, i.e., the NbC, TiC, and VC particles with a diameter of 100 nm or less, is less than 80 particles per 1 $\mu m^2$ in a cross section of the sheet, the surface area of the carbide interfaces serving as hydrogen trapping sites is insufficient, and the amount of hydrogen entering the nugget 3 and causing delayed fracture cannot be sufficiently reduced.

Therefore, the total average number density of the NbC, TiC, and VC particles with a diameter of 100 nm or less is set to 80 particles/$\mu m^2$ or more. The total average number density of the NbC, TiC, and VC particles with a diameter of 100 nm or less is preferably 90 particles/$\mu m^2$ or more.

No particular limitation is imposed on the upper limit of the average number density of the carbides. From the viewpoint of ensuring the joint strength after overheating, the total average number density of the NbC, TiC, and VC particles with a diameter of 100 nm or less is preferably 150 particles/$\mu m^2$ or less and more preferably 140 particles/$\mu m^2$ or less.

In the present invention, the total average number density of NbC, TiC, and VC particles with a diameter of 70 nm or less instead of the carbide particles with a diameter of 100 nm or less is preferably 60 particles/$\mu m^2$ or more and more preferably 80 particles/$\mu m^2$ or more. This average number density is preferably 130 particles/$\mu m^2$ or less, more

preferably 120 particles/$\mu$m$^2$ or less, and still more preferably 100 particles/$\mu$m$^2$ or less. When the amount of the carbides having the above particle diameter is within the above range, the surface area of the carbides per unit volume is large, so that a larger amount of diffusible hydrogen can be trapped. This can be controlled in the secondary energization step described later.

In the present invention, the Vickers hardness of the weld, the Vickers hardness of the base material, the diameters of the NbC, TiC, and VC particles, and their average number density can be measured by methods described later in Examples.

[High strength steel sheet]

The reasons for the limitations on the chemical composition of the high strength steel sheet in the welded joint of the invention will be described. In the present invention, the "high strength steel sheet" is a steel sheet having a tensile strength (TS) or 980 MPa or more. In the following description, "%" in the chemical composition represents "% by mass" unless otherwise specified.

C: 0.10 to 0.40%

C is used to control the microstructure so that the steel sheet has a TS of 980 MPa or more and to control the hardness of the nugget. If the content of C is less than 0.10%, it is difficult to obtain a TS of 980 MPa or more. If the content of C exceeds 0.40%, the hardness of the nugget is high, and it is difficult to control fracture in the nugget. Therefore, the content of C is 0.10 to 0.40%. The content of C is preferably 0.13% or more. The content of C is preferably 0.25% or less.

Si: 0.10 to 2.50%

Si is used to control the microstructure of the steel sheet and to control the size and amount of inclusions. If the content of Si is less than 0.10%, it is difficult to obtain a TS of 980 MPa or more. If the content of Si exceeds 2.50%, the amount of carbides formed in the heat-affected zone is less than the target amount in the invention because of the carbide formation inhibition effect of Si, and therefore it is difficult to improve the delayed fracture characteristics of the weld. Therefore, the content of Si is 0.10 to 2.50%. The content of Si is preferably 0.20% or more. The content of Si is preferably 1.70% or less.

Mn: 1.0 to 5.0%

Mn is used to control the microstructure of the steel sheet and the microstructure of the nugget and to control the size and amount of inclusions. If the content of Mn is less than 1.0%, it is difficult to obtain a TS of 980 MPa or more. If the content of Mn exceeds 5.0%, the amount of coarse inclusions in the nugget increases, and the tendency of the nugget to undergo brittle fracture increases. Therefore, the content of Mn is 1.0 to 5.0%. The content of Mn is preferably 1.2% or more. The content of Mn is preferably 2.8% or less.

P: 0.020% or less

P is present as a solute in the nugget and increases the tendency of the nugget to undergo brittle fracture. Therefore, if the content of P exceeds 0.020%, fracture may occur inside the nugget even when the hardness and microstructure of the nugget are controlled. Therefore, the content of P is 0.020% or less. The content of P is preferably 0.015% or less and more preferably 0.010% or less. No particular limitation is imposed on the lower limit of the content of P. However, since an excessive reduction in the content of P causes an increase in cost, the content of P is preferably 0.0005% or more.

S: less than 0.010%

S is present as a solute or sulfides in the nugget and increases the tendency of the nugget to undergo brittle fracture. If the content of S is 0.010% or more, fracture may occur inside the nugget even when the hardness and microstructure of the nugget are controlled. Therefore, the content of S is less than 0.010%. The content of S is preferably 0.005% or less. No particular limitation is imposed on the lower limit of the content of S. However, since an excessive reduction in the content of S causes an increase in cost, the content of S is preferably 0.0001% or more.

Al: 0.10% or less

Al is an element that controls the sizes and amounts of oxide-based inclusions formed by reactions between the weld and the outside air. If the content of Al exceeds 0.10%, the amount of coarse inclusions in the nugget increases, and the tendency of the nugget to undergo brittle fracture increases. Therefore, the content of Al is 0.10% or less. No particular limitation is imposed on the lower limit of the content of Al. However, in view of the limitations on the production technology, the content of Al is preferably 0.005% or more. The content of Al is preferably 0.05% or less .

N: 0.010% or less

N is present as nitrides in the steel. If the content of N exceeds 0.010%, the deformability of the steel sheet deteriorates, and it is difficult to control brittle fracture in the nugget during and after welding. Therefore, the content of N is 0.010% or less. No particular limitation is imposed on the lower limit of the content of N. However, in view of the limitations on the production technology, the content of N is preferably 0.0005% or more. The content of N is preferably 0.005% or less.

One or two or more selected from Nb: 0.10% or less, Ti: 0.10% or less, and V: 0.20% or less

Nb, Ti, and V are used to control the sizes and amounts of carbides in the steel sheet and the heat-affected zone. When at least one of Nb, Ti, and V is contained, their contents are Nb: 0.10% or less, Ti: 0.10% or less, and V: 0.20% or less and are within the range of formula (1) (i.e., the value of the left-hand side of formula (1) ([Nb] + [Ti] + [V] / 5)) is 0.01% or more). If Nb: more than 0.10%, Ti: more than 0.10%, or V: more than 0.20%, a large amount of coarse precipitates are formed in the heat-affected zone, and the joint strength decreases. If the contents of Nb, Ti, and V are outside the range of formula (1) (i.e., the value of the left-hand side of formula (1) is less than 0.01%), it is difficult to achieve the target hydrogen trapping effect of the heat-affected zone in the invention.
When at least one of Nb, Ti, and V is contained, the contents of Nb, Ti, and V are preferably Nb: 0.08% or less, Ti: 0.08% or less, and V: 0.16% or less, and the value of the left-hand side of formula (1) (i.e., the lower limit of formula (1)) is 0.04% or more.
When at least one of Nb, Ti, and V is contained, the contents of Nb, Ti, and V are preferably Nb: 0.001% or more, Ti: 0.001% or more, and V: 0.005% or more, and the value of the left-hand side of formula (1) is preferably 0.01% or more. The value of the left-hand side of formula (1) is preferably 0.55% or less.
One or two or more of Nb, Ti, and V may be contained, and the content of an element not contained is 0%.

$$([Nb] + [Ti] + [V] / 5) \geq 0.01\% \qquad (1)$$

Here, the element symbols in formula (1) represent the contents (% by mass) of the respective elements in the base material, and the content of an element is 0 when the element is not contained.
The high strength steel sheet in the invention contains the above elements with the balance being Fe and incidental impurities.
The above chemical composition is the basic chemical composition of the high strength steel sheet. In the present invention, one or two or more selected from Mo, Cr, Ca, Sb, B, Cu, and Ni may be optionally contained, in addition to the above chemical composition. The following components Mo, Cr, Ca, Sb, B, Cu, and Ni are optionally contained, and their contents may be 0%.

Mo: 0.500% or less

Mo is an element that improves the hardenability and is an element effective in forming a hard phase. If the content of Mo exceeds 0.500%, the area fraction of the hard phase increases, and the dimensional accuracy and ductility during forming deteriorate. Therefore, the content of Mo is 0.500% or less. The lower limit of the content of Mo may be 0.000%. However, from the viewpoint of increasing the hardenability and adjusting the TS within a more preferred range, the content of Mo is preferably 0.010% or more. The content of Mo is preferably 0.300% or less and more preferably 0.100% or less. The content of Mo is more preferably 0.030% or more.

Cr: 0.300% or less

Cr is an element that improves the hardenability and is an element effective in forming a hard phase. If the content of Cr exceeds 0.300%, the area fraction of the hard phase increases, and the dimensional accuracy and ductility during forming deteriorate. Therefore, the content of Cr is 0.300% or less. The lower limit of the content of Cr may be 0.000%. However, from the viewpoint of increasing the hardenability and adjusting the TS within a more preferred range, the content of Cr is preferably 0.010% or more. The content of Cr is preferably 0.250% or less and more preferably 0.100% or less.

Ca: 0.0200% or less

Ca is present as inclusions in the steel. If the content of Ca exceeds 0.0200%, the inclusions may serve as crack initiation points during a bending test when the steel sheet contains diffusible hydrogen, so that the bendability deteriorates. Therefore, the content of Ca is 0.0200% or less. The lower limit of the content of Ca may be 0.0000%. However, in view of the limitations on the production technology, the content of Ca is preferably 0.0001% or more. The content of Ca is preferably 0.0020% or more.

Sb: 0.200% or less

Sb is an element effective in suppressing the oxidation of the surface of the steel sheet during annealing to control the thickness of a softened surface layer. Moreover, Sb is an element that can suppress nitriding of the surface layer of the steel sheet during annealing to thereby reduce the frequency of coincidence boundaries in the surface layer of the steel sheet. If the content of Sb exceeds 0.200%, the softened surface layer portion cannot be formed, so that the bendability and the LME resistance deteriorate. Therefore, the content of Sb is 0.200% or less. The lower limit of the content of Sb may be 0.000%. However, to reduce the frequency of coincidence boundaries and obtain better LME resistance, the content of Sb is preferably 0.001% or more. The content of Sb is more preferably 0.002% or more and still more preferably 0.005% or more. The content of Sb is preferably 0.050% or less and more preferably 0.020% or less.

B: 0.0100% or less

B is used to control the microstructures of the raw material steel sheet and the nugget.
B is an element that segregates at austenite grain boundaries and can improve the hardenability. When B is added to the steel, the formation of ferrite during cooling for annealing and the growth of the ferrite grains can be suppressed. To obtain these effects, the content of B is 0.0001% or more. If the content of B exceeds 0.0100%, cracking may occur in the steel sheet during hot rolling, and the ultimate deformation ability of the steel sheet deteriorates. In this case, the total number density of voids after blanking increases, and the stretch flangeability decreases. Moreover, the bendability decreases. Therefore, when B is added, the content of B is 0.0001% or more and is 0.0100% or less. When B is added, its content is preferably 0.0002% or more. When B is added, its content is preferably 0.0050% or less.

Cu: 1.00% or less

Cu is an element that increases the hardenability and is an element effective in adjusting the area fraction of a hard phase within a more preferred range, adjusting the TS within a more preferred range, and further improving the dimensional accuracy during forming. To obtain these effects, the content of Cu is set to 0.01% or more. If the content of Cu exceeds 1.00%, the area fraction of the hard phase increases, and the dimensional accuracy and the ductility during forming deteriorate. Moreover, the amount of coarse precipitates and inclusions increases, and the precipitates and inclusions may serve as crack initiation points during a bending test when the steel sheet contains diffusible hydrogen, so that the bendability deteriorates. Therefore, when Cu is added, its content is 0.01% or more and 1.00% or less. When Cu is added, its content is preferably 0.02% or more. When Cu is added, its content is preferably 0.20% or less.

Ni: 0.50% or less

Ni is an element that increases the hardenability and is an element effective in adjusting the area fraction of a hard phase within a more preferred range, adjusting the TS within a more preferred range, and further improving the dimensional accuracy during forming. To obtain these effects, the content of Ni is set to 0.01% or more. If the content of Ni exceeds 0.50%, the area fraction of the hard phase increases, and the dimensional accuracy and the ductility during forming deteriorate. Moreover, the amount of coarse precipitates and inclusions increases, and the precipitates and inclusions may serve as crack initiation points during a bending test when the steel sheet contains diffusible hydrogen, so that the bendability deteriorates. Therefore, when Ni is added, its content is 0.01% or more and 0.50% or less. When Ni is added, its content is preferably 0.02% or more. When Ni is added, its content is preferably 0.20% or less.
In the present invention, the high strength steel sheet may optionally have a metal coated layer on the surface of its base material steel sheet. The metal coated layer is preferably a galvanized layer or a galvannealed layer. In particular, for automobile applications, hot-dip galvanization treatment may be performed to produce a hot-dip galvanized steel sheet (GI) including a galvanized layer on the surface of the base material steel sheet. After the hot-dip galvanization treatment, galvannealing treatment may be performed to produce a hot-dip galvannealed steel sheet (GA) having a galvannealed layer on the surface of the base material steel sheet.

[Resistance spot welding method]

Next, an embodiment of a resistance spot welding method for producing a welded joint having the above-described weld will be described.

The welded joint of the invention can be produced by resistance spot welding that includes: holding, between a pair of welding electrodes, a sheet set including two or more overlapping steel sheets including at least one high strength steel sheet; and energizing the sheet set under the application of pressure to thereby join the steel sheets together.

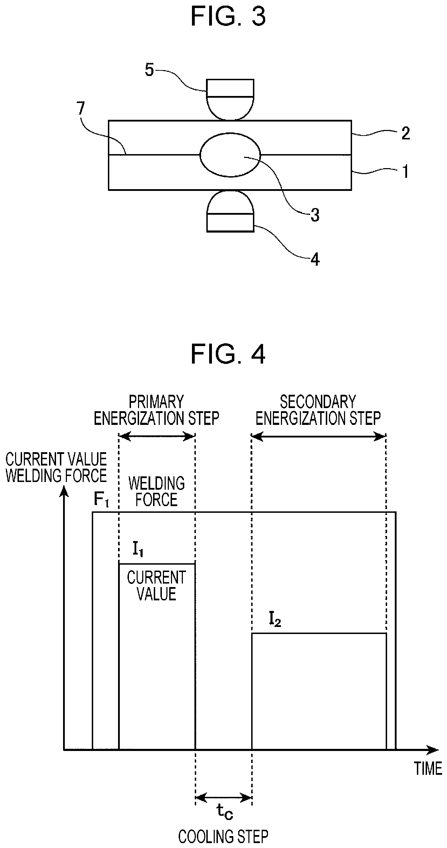

First, two or more steel sheets are disposed so as to overlap each other. For example, in Fig. 3, two steel sheets are used. The steel sheet 1 disposed on the lower side (hereinafter referred to as a "lower steel sheet") and the steel sheet 2 disposed on the upper side (hereinafter referred to as an "upper steel sheet") are disposed so as to overlap each other to prepare a sheet set. Although not illustrated, when three or more steel sheets are disposed so as to overlap each other to prepare a sheet set, the lowermost steel sheet is referred to as a "lower steel sheet," and the uppermost steel sheet is referred to as an "upper steel sheet." Steel sheets disposed between these steel sheets are referred to as "middle steel sheets."

Next, the overlapping steel sheets (i.e., the lower steel sheet 1 and the upper steel sheet 2) are held between the pair of welding electrodes, i.e., a welding electrode 4 disposed on the lower side of the sheet set (which may be hereinafter referred to as a "lower electrode") and a welding electrode 5 disposed on the upper side of the sheet set (which may be hereinafter referred to as an "upper electrode") and energized under the application of pressure.

No particular limitation is imposed on the structure of an apparatus used to perform the resistance spot welding method of the invention, so long as the apparatus has a structure in which a pair of welding electrodes 4 and 5 are used for pressurization while the welding force is controlled. For example, a conventionally known apparatus such as an air cylinder or a servo motor can be used. No particular limitation is imposed on the structure used to supply a current during energization and control the current value, and a conventionally known apparatus can be used. The current used in the invention may be a DC current or an AC current. When an AC current is used, the "current" means an "effective current."

No particular limitation is imposed on the tip type of the welding electrodes 4 and 5. Examples of the tip type include a DR type (dome radius type), an R type (radius type), and a D type (dome type) specified in JIS C9304: 1999. The tip diameter of each welding electrode is, for example, 4 mm to 16 mm. The radius of curvature of the tip is, for example, 50 mm to 200 mm. Flat electrodes having flat tip ends may also be used.

The resistance spot welding is performed with the welding electrodes constantly water-cooled.

As described above, the overlapping steel sheets 1 and 2 (i.e., the sheet set) are held between the pair of welding electrodes 4 and 5 and energized under the application of pressure. A nugget 3 having the required size is thereby formed by resistant heating, and the overlapping steel sheets are joined together, so that a welded joint is obtained.

The present invention is also applicable to a resistance spot welding method for a sheet set in which both sides of the sheet set to be in contact with the welding electrodes 4 and 5 disposed on the upper and lower sides of the sheet set or one side thereof is a surface-treated steel sheet having a metal coated layer. The "both sides of the sheet set to be in contact with the welding electrodes" are the two outermost steel sheets that are included in the sheet set including the plurality of steel sheets and are to be in contact with the upper and lower electrodes. The "one side of the sheet set to be in contact with the welding electrodes" is one of the two outermost steel sheets that is included in the sheet set including the plurality of steel sheets and is to be in contact with the upper or lower electrode. Preferably, the melting point of the metal coated layer used is lower than the melting point of the base material of the surface-treated steel sheet.

As described above, the surface-treated steel sheet is a steel sheet having a metal coated layer on the surface of the base material (i.e., the base steel sheet). Examples of the metal coated layer include: zinc coatings typified by electrogalvanized coatings and hot-dip galvanized coatings (the hot-dip galvanized coatings include hot-dip galvannealed coatings); and zinc alloy coatings containing, in addition to zinc, another element such as aluminum or magnesium. In the present embodiment, the above-described surface-treated steel sheet is referred to as a "zinc-based coated steel sheet." Therefore, in the present invention, at least one of the plurality of steel sheets included in the sheet set is a zinc-based coated steel sheet.

In the present invention, no particular limitation is imposed on the thicknesses of the steel sheets to be resistance-spot-welded. The thicknesses are preferably in the range of, for example, 0.5 mm or more and 3.0 mm or less. Steel sheets having a thickness in the above range can be preferably used for automobile members.

The two or more steel sheets to be resistance-spot-welded may be steel sheets of the same type and having the same shape or may be steel sheets of different types and having different shapes. A combination of a surface-treated steel sheet having a metal coated layer and a steel sheet having no metal coated layer that overlap each other may be used.

Next, an energization pattern in the resistance spot welding method of the invention will be described.

In the present invention, the pressurization and energization described above are performed in a specific pattern described below. The energization includes a primary energization step and a secondary energization step. A non-energizing cooling step is provided between the primary energization step and the secondary energization step.

<Primary energization step>

The primary energization step is the step of forming a nugget portion by melting the faying surface 7 by energization and allowing the molten faying surface 7 to solidify to thereby form a nugget 3 (see Fig. 1). The energization conditions and the pressurization conditions in the primary energization step are appropriately selected so that the nugget portion can be formed.

In the present invention, it is preferable that a current value $I_1$ in the primary energization step is, for example, 1.0 kA or more and 15.0 kA or less, that a welding force F1 is 2.0 kN or more and 7.0 kN or less, and that an energization time $t_1$ in the primary energization step is 100 ms or longer and 1000 ms or shorter.

The "nugget 3" is a melted and solidified portion formed in the weld during resistance welding.

The primary energization step may be a multi-stage energization step in which the current value is changed in the primary energization step or a multi-stage energization step in which the welding force is changed in the primary energization step.

<Cooling step>

After the primary energization step described above, the cooling step is performed. The cooling step is performed immediately after the formation of the nugget in the primary energization step for the purpose of lowering the temperature of the weld by bringing the electrodes into contact in order to prevent the occurrence of splashes due to overheating in the secondary energization step. In the cooling step, a non-energization state is maintained for a prescribed cooling time tc. The cooling time tc is preferably 500 ms or longer and 2000 ms or shorter. The cooling time tc is more preferably 550 ms or longer and is more preferably 1800 ms shorter.

<Secondary energization step>

After the primary energization step and the cooling step, the secondary energization step is performed. The secondary energization step is performed for the purpose of heating the heat-affected zone without causing the diameter of the nugget to increase by changing the value of the current supplied.

Specifically, in the secondary energization step, the welding force F2 is set to 2.0 to 7.0 kN, and the current value $I_2$ is set so as to satisfy the relation of formula (4) with the current value $I_1$ in the primary energization step. The energization is performed for an energization time $t_2$ represented by formula (5).

$$0.6 \times I_1 < I_2 < 1.0 \times I_1 \qquad (4)$$

$$2100 - 8200 \times ([Nb] + [Ti] + [V] / 5) < t_2 \qquad (5)$$

In these formulas,

$I_1$: the current value (kA) in the primary energization step,
$I_2$: the current value (kA) in the secondary energization step, and
$t_2$: the energization time (ms) in the secondary energization step.

The element symbols in formula (5) represent the contents (% by mass) of the respective elements in the base material of the steel sheet, and the content of an element is 0 when the element is not contained.

First, the current value $I_2$ in the secondary energization step will be described.

In the secondary energization step, the energization is performed at the current value $I_2$ (kA) satisfying formula (4). In the present invention, after completion of the primary energization step followed by the cooling step, energization is performed at the current value $I_2$ (kA) in the secondary energization step to reheat the nugget. Specifically, the nugget is formed in the primary energization step, and the weld is reheated in the secondary energization step to temper the heat-affected zone. In this manner, the state in which a larger amount of carbides can be precipitated is maintained during the energization in the secondary energization step.

The secondary energization step is the step of reheating the heat-affected zone around the solidified nugget. If the current value $I_2$ (kA) is equal to or less than $(0.6 \times I_1)$ (kA), the weld is not sufficiently reheated, and the amount of the carbides precipitated is not large enough to trap hydrogen entering from the external environment. Therefore, the current value $I_2$ (kA) is set to be larger than $(0.6 \times I_1)$ (kA). The current value $I_2$ (kA) is preferably more than $(0.7 \times I_1)$ (kA).

If the current value $I_2$ (kA) is excessively large, the heat-affected zone is overheated, and a sufficient amount of carbides may not be obtained. Moreover, if the current value $I_2$ is high, defects such as splashes due to melting may be likely to occur. For the reason described above, the current value $I_2$ (kA) with respect to the current value $I_1$ in the primary energization step is set to be less than $(1.0 \times I_1)$ (kA). The current value $I_2$ (kA) is more preferably less than $(0.9 \times I_1)$ (kA). The energization pattern of the secondary energization step may be multi-stage energization. Even in this case, the same effects as described above can be obtained.

Next, the energization time $t_2$ in the secondary energization step will be described. When the energization is performed under the above-described condition for the current value $I_2$ (kA), the carbides targeted in the present invention are formed by tempering the weld when the energization time $t_2$ (ms) represented by formula (5) is satisfied. In this case, the average number density of the carbides formed can be controlled within the above-described range. If the energization time $t_2$ in the secondary energization step is equal to or less than the value of the left-hand side of formula (5) (i.e., the value calculated by $2100 - 8200 \times ([Nb] + [Ti] + [V] / 5)$), the heat-affected zone is not sufficiently heated, and a sufficient amount of carbides is not precipitated, so that the delayed fracture resistance targeted in the invention is not obtained. Therefore, the energization time $t_2$ in the secondary energization step is set to be longer than the left-hand side of formula (5). The energization time $t_2$ (ms) is preferably 400 ms or longer.

When two or more steel sheets of different steel types (e.g., high strength steel sheets of different types) are disposed so as to overlap to prepare a sheet set, the value of the left-side hand of formula (5) is calculated using the amount of Nb, Ti, and V for each of the steel sheets, and the average value is determined. Then the average value is compared with the energization time $t_2$.

In the present invention, no particular limitation is imposed on the upper limit of the energization time $t_2$ (ms) in the secondary energization step. However, if the energization time $t_2$ is excessively long, the degree of tempering is excessively high, and the strength of the welded joint cannot be ensured. For the reason described above, the energization time $t_2$ in the secondary energization step is preferably 2000 ms or shorter, more preferably 800 ms or shorter, and still more preferably 600 ms or shorter.

Next, the welding force F2 in the secondary energization step will be described.

In addition to the above-described conditions, the welding force F2 in the secondary energization step is set to be 2.0 kN or more and 7.0 kN or less. If the welding force F2 is less than 2.0 kN, the welding force is insufficient, and the size of the nugget formed is insufficient. If the welding force F2 exceeds 7.0 kN, splashes may be formed during welding.

After the secondary energization step described above, a holding step is performed. The holding step is performed for the purpose of cooling the weld stably after the overheating in the secondary energization step to thereby prevent cracking. The holding time $t_h$ is preferably 10 ms or longer and 100 ms or shorter.

Fig. 4 shows an example of the energization pattern in the invention. In Fig. 4, the vertical axis represents the current value and the welding force, and the horizontal axis represents time. The current value and the welding force increase as one moves upward along the vertical axis. For example, as shown in Fig. 4, after the primary energization step is performed at the current value $I_1$ with the welding force maintained constant, the cooling step is performed for the cooling time $t_c$, and then the secondary energization step is performed at the current value $I_2$ for the energization time $t_2$.

In the above description, the case where two or more overlapping steel sheets are resistance-spot-welded has been mainly described. However, the present invention is also applicable to the case where three or more overlapping steel sheets are welded, and the same effects as those described above can be obtained.

EXAMPLES

The operations and effects of the present invention will be described by way of Examples. However, the present invention is not limited to the following Examples.

Steel sheets of the steel types shown in Table 1 were used as the lower and upper steel sheets 1 and 2 shown in Fig. 3 and disposed so as to overlap each other to prepare sheet sets shown in Table 2. Each of the sheet sets was resistance-spot-welded under welding conditions shown in Table 2 to produce a welded joint. The welded joint produced was used as a specimen.

In Table 2, when steel sheets of different steel types were disposed so as to overlap each other to prepare a sheet set, the left-hand side of formula (5) was calculated using the amounts of Nb, Ti, and V for each of the steel sheets, and the average value was used for comparison with the energization time $t_2$ in the secondary energization step.

The strengths (TS) of the lower and upper steel sheets 1 and 2 and the presence or absence of the metal coated layer are shown in Table 1. The metal coated layer is specifically a zinc coating. As for the size of each steel sheet, the length of the long side is 100 mm, the length of the short side is 30 mm, and the thickness is 1.4 mm.

The "tensile strength" of a steel sheet is its tensile strength (MPa) determined by cutting the steel sheet in a direction parallel to the rolling direction to produce a JIS No. 5 tensile strength test specimen and performing a tensile test according to the specifications of JIS Z 2241:2011.

The resistance spot welding was performed at room temperature with the welding electrodes (i.e., the lower and upper electrodes) water-cooled constantly. The lower and upper electrodes were each a chromium-copper-made DR-type electrode having a tip with a diameter (i.e., a tip diameter) of 6 mm and a radius of curvature of 40 mm. The lower and upper electrodes were driven by a servo motor to control the welding force, and a single-phase alternating current with a frequency of 50 Hz was supplied during energization.

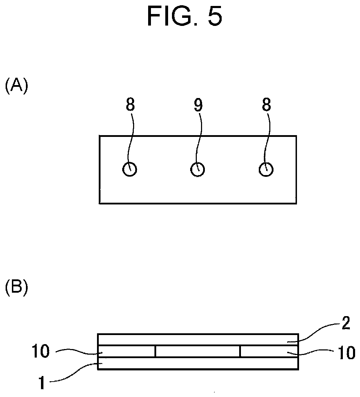

The resistance spot welding was performed as follows. As shown in Fig. 5, a 30 mm square spacer 10 having a thickness of 1.5 mm was held between opposite end sides of the two steel sheets 1 and 2 (long-side length: 100 mm, short-side length: 30 mm), and tack welding was performed. Then the center of the sheet set including the two overlapping steel sheets was welded under welding conditions shown in Table 2. Fig. 5 includes a plan view (see Fig. 5(A)) and a side view (see Fig. 5(B)) showing the test specimen for resistance spot welding. The symbol 9 in Fig. 5 represents a weld point, and the symbol 8 represents a tack weld point. For all the specimens, the primary energization step was performed while the current value and the energization time were controlled such that the diameter of the nugget was $4\sqrt{t}$, where t is the sheet thickness.

Each of the welded joints obtained was left to stand at room temperature (20°C in this case) in air, and (1) hardness measurement, (2) measurement of the width of the softened portion in the heat-affected zone, (3) observation of a cross section of the weld under a scanning electron microscope (SEM), and (4) evaluation of delayed fracture resistance by an immersion test were performed using methods described below.

(1) Hardness measurement

The Vickers hardnesses of the weld and the base material of each steel sheet were measured by the following method.

Each of the welded joints obtained was cut at a position passing through the center of the nugget to prepare a test specimen. The test specimen was subjected to ultrasonic cleaning and embedded in a resin to prepare a sample. A cross section of the weld of the sample was polished and etched with a picric acid solution to prepare a sample. The Vickers hardnesses of the weld and the base metal zone were measured using a Vickers hardness meter according to JIS Z 2244 (2020). As for the measurement load conditions, an indenter of 300 gf was used to apply a load for 15 seconds.

The "Hardness X of softest portion of heat-affected zone" shown in Table 3 was determined as follows. Specifically, the hardness of the sample was measured at positions spaced at 0.2 mm intervals on a straight line parallel to the faying surface 7 of the steel sheets and located 0.2 mm above the faying surface 7. The measurement region was a region extending from the center of the nugget 3 to the base material of the steel sheet (see Fig. 1). The reason that the "positions 0.2 mm above the faying surface 7 of the steel sheets" were used is that the high strength steel sheet was used for the upper steel sheet. When the high strength steel sheet was used for the lower steel sheet, the measurement was performed at positions 0.2 mm below the faying surface 7 of the steel sheets.

As shown in Fig. 2, the "softened portion 6a of the heat-affected zone 6" is a region of the heat-affected zone 6 in which the Vickers hardness measured according to JIS Z 2244 (2020) is equal to or less than the average Vickers hardness of the base material of the high strength steel sheet, and the "hardness X of the softest portion" is the minimum value in this region. The "average Vickers hardness of the base material of the high strength steel sheet" is the average of measurement values obtained by performing the hardness measurement of the base material of the high strength steel sheet five times under the conditions described above.

(2) Measurement of width Dh of softened portion of heat-affected zone

Each sample prepared for the harness measurement was used to measure the width Dh of the softened portion.

Specifically, as shown in Fig. 1, two points (i.e., points a and b) were determined at which an extension of the straight line Z connecting the intersections of the nugget 3 and the faying surface 7 (i.e., the edges E of the nugget) intersected the boundaries of the softened portion 6a (i.e., the inner and outer circumferential edges of the softened portion 6a). The length of a straight line connecting these two points was measured under an optical microscope and used as the width Dh (mm) of the softened portion 6a. The point a is the intersection of the extension of the straight line Z and the inner circumferential edge of the softened portion 6a, and the point b is the intersection of the extension of the straight line Z and the outer circumferential edge of the softened portion 6a.

(3) Observation of cross section

In the observation of the cross section, the density of carbides in the heat-affected zone was measured. In this case, the carbides measured were NbC, TiC, and VC.

The diameters of the NbC, TiC, and VC particles were determined as follows. The heat-affected zone was cut from one of the welded joints obtained, and a thicknesswise cross section of the heat-affected zone was polished, etched with 3% nital, and observed under a transmission electron microscope (TEM) at a magnification of 10000X. Then Image-Pro was used to compute the equivalent circle diameters of the carbide particles with the lower limit set to 0.005 um to thereby determine the diameters of the carbide particles. The average number density (particles/1 $\mu m^2$) of the NbC, TiC, and VC particles having a diameter of 100 nm or less was determined as follows. The cross section was observed under the TEM at a magnification of 10000X. The number density was determined at 10 portions, and the average of the measurements was used. The observation was performed on each of the upper steel sheet and the lower steel sheet. The same method was used to determine the average number density (particles/1 $\mu m^2$) of NbC, TiC, and VC particles having a diameter of 70 nm or less.

The values obtained are shown in the "Total average number density of carbides with diameter of 100 nm or less" column and the "Total average number density of carbides with diameter of 70 nm or less" column in Table 3.

(4) Evaluation of delayed fracture resistance

The delayed fracture resistance was evaluated using the immersion test as follows. First, a welded joint left to stand at room temperature (20°C in this case) in air for 24 hours or longer after welding was used as a specimen. The specimen was immersed in a hydrochloric acid solution with a pH of 2.5 for 96 hours, and then the presence or absence of delayed fracture was checked. In Table 3, the symbol "o" was given to a specimen in which the nugget did not peel, and the symbol "×" was given to a specimen in which the nugget peeled. The phrase "the nugget peeled" means that the nugget was separated into two portions at the joint interface. When the symbol "o" was give, the specimen was considered to have "good delayed fracture resistance."

The results obtained are shown in Table 3. In each of the "formula (1)" column to the "formula (5)" column shown in Tables 1 to 3, the result as to whether the formula is satisfied is shown. The symbol "o" represents that the relational formula is satisfied, and the symbol "×" represents that the relational formula is not satisfied.

[Table 1]

| Steel type | Tensile strength (MPa) | Presence of metal coated layer | Chemical composition (% by mass) | | | | | | | | | | | | | | | | | ([Nb]+[Ti]+[V]/5) (%) | Formula (1) |
|---|---|---|---|---|---|---|---|---|---|---|---|---|---|---|---|---|---|---|---|---|---|---|
| | | | C | Si | Mn | P | S | Al | N | Mo | Cr | Ca | Sb | B | Cu | Ni | Nb | Ti | V | | |
| A | 1200 | × | 0.250 | 1.100 | 1.800 | 0.0100 | 0.002 | 0.060 | 0.005 | 0.350 | 0.200 | 0.012 | 0.070 | 0.003 | 0.250 | 0.350 | 0.010 | 0.010 | 0.010 | 0.022 | ○ |
| B | 1100 | × | 0.190 | 0.500 | 2.200 | 0.0130 | 0.008 | 0.040 | 0.003 | 0.280 | 0.180 | 0.008 | 0.150 | 0.001 | 0.450 | 0.180 | 0.030 | 0.030 | 0.060 | 0.072 | ○ |
| C | 1150 | × | 0.210 | 1.300 | 2.500 | 0.0080 | 0.005 | 0.030 | 0.001 | 0.300 | 0.210 | 0.018 | 0.160 | 0.008 | 0.950 | 0.450 | 0.090 | 0.090 | 0.150 | 0.210 | ○ |
| D | 1400 | × | 0.380 | 2.200 | 1.100 | 0.0160 | 0.009 | 0.070 | 0.005 | 0.480 | 0.290 | 0.013 | 0.090 | 0.007 | 0.350 | 0.370 | 0.050 | 0.070 | 0.000 | 0.120 | ○ |
| E | 1350 | × | 0.310 | 1.800 | 1.300 | 0.0050 | 0.007 | 0.050 | 0.004 | 0.400 | 0.300 | 0.006 | 0.150 | 0.006 | 0.980 | 0.250 | 0.060 | 0.000 | 0.120 | 0.084 | ○ |
| F | 1100 | × | 0.200 | 0.300 | 1.800 | 0.0090 | 0.003 | 0.060 | 0.001 | 0.310 | 0.170 | 0.004 | 0.070 | 0.009 | 0.870 | 0.470 | 0.000 | 0.050 | 0.200 | 0.090 | ○ |
| G | 1250 | × | 0.270 | 1.400 | 3.500 | 0.0110 | 0.006 | 0.080 | 0.008 | 0.380 | 0.250 | 0.015 | 0.180 | 0.010 | 0.480 | 0.110 | 0.000 | 0.000 | 0.000 | 0.000 | × |
| H | 1200 | ○ | 0.240 | 1.000 | 4.800 | 0.0180 | 0.004 | 0.020 | 0.009 | 0.350 | 0.230 | 0.012 | 0.070 | 0.004 | 0.250 | 0.350 | 0.010 | 0.010 | 0.010 | 0.022 | ○ |
| I | 1100 | ○ | 0.210 | 0.200 | 3.200 | 0.0150 | 0.005 | 0.090 | 0.003 | 0.200 | 0.110 | 0.008 | 0.150 | 0.006 | 0.300 | 0.180 | 0.030 | 0.040 | 0.060 | 0.082 | ○ |
| J | 1150 | ○ | 0.190 | 0.100 | 2.800 | 0.0007 | 0.009 | 0.070 | 0.001 | 0.210 | 0.130 | 0.018 | 0.160 | 0.005 | 1.000 | 0.450 | 0.090 | 0.100 | 0.140 | 0.218 | ○ |
| K | 1050 | × | 0.150 | 0.800 | 2.100 | 0.0030 | 0.003 | 0.050 | 0.004 | - | - | - | - | - | - | - | 0.050 | 0.050 | 0.120 | 0.124 | ○ |
| L | 950 | × | 0.110 | 0.100 | 1.500 | 0.0050 | 0.004 | 0.040 | 0.008 | - | - | - | - | - | - | - | 0.030 | 0.070 | 0.150 | 0.130 | ○ |

*1. Formula (1): ([Nb] + [Ti] + [V] / 5) ≥ 0.01%

[Table 2]

| Specimen number | Sheet set (upper steel sheet-lower steel sheet or upper steel sheet-middle steel sheet-lower steel sheet) | Primary energization step | | | Cooling step | Secondary energization step | | | | | Holding time ($t_h$) |
|---|---|---|---|---|---|---|---|---|---|---|---|
| | | Welding force (kN) | Energization time ($t_1$) (ms) | Current value ($I_1$) (kA) | Cooling time (tc) (ms) | Welding force (kN) | Energization time ($t_2$) (ms) | Current value ($I_2$) (kA) | Formula (4) | Formula (5) | (ms) |
| 1 | A-A | 3.5 | 280 | 5.1 | 1500 | 3.5 | 500 | 3.5 | ○ | × | 20 |
| 2 | B-B | 3.5 | 280 | 5.3 | 1500 | 3.5 | 500 | 3.5 | ○ | × | 20 |
| 3 | C-C | 3.5 | 280 | 5.5 | 1500 | 3.5 | 500 | 3.5 | ○ | ○ | 20 |
| 4 | C-D | 3.5 | 280 | 5.0 | 1500 | 3.5 | 500 | 3.5 | ○ | × | 20 |
| 5 | C-E | 3.5 | 280 | 5.1 | 1500 | 3.5 | 500 | 3.5 | ○ | × | 20 |
| 6 | C-F | 3.5 | 280 | 5.0 | 1500 | 3.5 | 500 | 3.5 | ○ | × | 20 |
| 7 | C-G | 3.5 | 280 | 5.0 | 1500 | 3.5 | 500 | 3.5 | ○ | × | 20 |
| 8 | A-H | 3.5 | 280 | 5.2 | 1500 | 3.5 | 500 | 3.5 | ○ | × | 20 |
| 9 | B-1 | 3.5 | 280 | 5.4 | 1500 | 3.5 | 500 | 3.5 | ○ | × | 20 |
| 10 | C-J | 3.5 | 280 | 5.6 | 1500 | 3.5 | 500 | 3.5 | ○ | ○ | 20 |
| 11 | C-C | 3.5 | 280 | 5.5 | 1500 | 1.0 | 500 | 3.5 | ○ | ○ | 20 |
| 12 | C-C | 3.5 | 280 | 5.3 | 1500 | 3.5 | 500 | 10.0 | × | ○ | 20 |
| 13 | C-C | 3.5 | 280 | 5.5 | 1500 | 3.5 | 500 | 1.0 | × | ○ | 20 |
| 14 | A-A | 3.5 | 280 | 5.5 | 1500 | 3.5 | 2000 | 5.0 | ○ | ○ | 20 |
| 15 | B-B | 3.5 | 280 | 5.5 | 1500 | 3.5 | 1600 | 4.8 | ○ | ○ | 20 |
| 16 | A-A | 3.5 | 280 | 5.5 | 1500 | 3.5 | 2500 | 3.5 | ○ | ○ | 20 |
| 17 | B-B | 3.5 | 280 | 5.5 | 1500 | 3.5 | 2000 | 3.5 | ○ | ○ | 20 |
| 18 | C-C | 3.5 | 280 | 5.5 | 500 | 3.5 | 500 | 3.5 | ○ | ○ | 20 |
| 19 | C-C-C | 3.5 | 280 | 5.5 | 1500 | 3.5 | 500 | 3.5 | ○ | ○ | 20 |
| 20 | G-G | 3.5 | 280 | 5.5 | 1500 | 3.5 | 500 | 3.5 | ○ | × | 20 |

| Specimen number | Sheet set (upper steel sheet-lower steel sheet or upper steel sheet-middle steel sheet-lower steel sheet) | Primary energization step | | | Cooling step | Secondary energization step | | | | | Holding time ($t_h$) |
|---|---|---|---|---|---|---|---|---|---|---|---|
| | | Welding force (kN) | Energization time ($t_1$) (ms) | Current value ($I_1$) (kA) | Cooling time (tc) (ms) | Welding force (kN) | Energization time ($t_2$) (ms) | Current value ($I_2$) (kA) | Formula (4) | Formula (5) | (ms) |
| 21 | K-K | 3.5 | 280 | 5.5 | 1500 | 3.5 | 500 | 3.5 | ○ | × | 20 |
| 22 | L-L | 3.5 | 280 | 5.5 | 1500 | 3.5 | 500 | 3.5 | ○ | × | 20 |
| 23 | C-C | 2.0 | 1000 | 4.5 | 1500 | 3.5 | 500 | 3.5 | ○ | ○ | 20 |
| 24 | C-C | 7.0 | 100 | 100 | 1500 | 3.5 | 380 | 6.2 | ○ | ○ | 20 |
| 25 | C-C | 4.5 | 600 | 6.5 | 560 | 3.5 | 450 | 4.0 | ○ | ○ | 20 |
| 26 | C-C | 5.0 | 800 | 5.0 | 1200 | 3.5 | 500 | 3.5 | ○ | ○ | 20 |
| 27 | C-C | 6.0 | 400 | 8.0 | 1750 | 3.5 | 400 | 5.0 | ○ | ○ | 20 |
| 28 | A-A | 3.5 | 280 | 5.1 | 1500 | 7.0 | 2000 | 3.5 | ○ | ○ | 20 |
| 29 | B-B | 3.5 | 280 | 5.3 | 1500 | 2.0 | 1600 | 3.5 | ○ | ○ | 20 |
| 30 | C-C | 3.5 | 280 | 5.5 | 1500 | 4.0 | 1000 | 5.4 | ○ | ○ | 20 |
| 31 | B-B | 3.5 | 280 | 5.3 | 1500 | 5.0 | 2000 | 3.3 | ○ | ○ | 20 |
| 32 | C-C | 3.5 | 280 | 5.5 | 1500 | 3.5 | 500 | 3.5 | ○ | ○ | 100 |
| 33 | C-C | 3.5 | 280 | 5.5 | 1500 | 3.5 | 500 | 3.5 | ○ | ○ | 50 |
| 34 | C-F | 3.5 | 280 | 5.2 | 1500 | 3.5 | 900 | 4.8 | ○ | ○ | 20 |
| *1. Formula (4): $0.6 \times I_1 < I_2 < 1.0 \times I_1$ *2. Formula (5): $2100 - 8200 \times ([Nb] + [Ti] + [V] / 5) < t_2$ | | | | | | | | | | | |

[Table 3]

| Specimen number | Nugget diameter (Dn) (mm) | Average hardness of nugget (HV) | Upper steel sheet |||||||| Lower steel sheet |||||||| Middle steel sheet |||||||| Evaluation | Remarks |
|---|---|---|---|---|---|---|---|---|---|---|---|---|---|---|---|---|---|---|---|---|---|---|---|---|---|
| | | | Hardness of base material (HV) | Hardness (X) of softest portion of heat-affected zone (HV) | Formula (3) | Width (Dh) (mm) | Formula (2) | Total avg. carbide 100 nm or less (particles/μm²) | Total avg. carbide 70 nm or less (particles/μm²) | Hardness of base material (HV) | Hardness (X) of softest portion of heat-affected zone (HV) | Formula (3) | Width (Dh) (mm) | Formula (2) | Total avg. carbide 100 nm or less (particles/μm²) | Total avg. carbide 70 nm or less (particles/μm²) | Hardness of base material (HV) | Hardness (X) of softest portion of heat-affected zone (HV) | Formula (3) | Width (Dh) (mm) | Formula (2) | Total avg. carbide 100 nm or less (particles/μm²) | Total avg. carbide 70 nm or less (particles/μm²) | Occurrence of cracking in weld (pH 2.5) | |
|---|---|---|---|---|---|---|---|---|---|---|---|---|---|---|---|---|---|---|---|---|---|---|---|---|---|
| 1 | 4.70 | 612.00 | 370 | 320 | o | 0.95 | o | 30 | 10 | 370 | 320 | o | 0.95 | o | 30 | 10 | - | - | - | - | - | - | - | × | Comparative Example |
| 2 | 4.72 | 520.00 | 390 | 318 | o | 1.05 | o | 35 | 15 | 390 | 318 | o | 1.05 | o | 35 | 15 | - | - | - | - | - | - | - | × | Comparative Example |
| 3 | 4.68 | 630.00 | 470 | 300 | o | 1.40 | o | 120 | 100 | 470 | 300 | o | 1.40 | o | 125 | 100 | - | - | - | - | - | - | - | o | Inventive Example |
| 4 | 4.71 | 651.00 | 470 | 310 | o | 1.25 | o | 125 | 100 | 380 | 300 | o | 1.25 | o | 65 | 40 | - | - | - | - | - | - | - | o | Inventive Example |
| 5 | 4.73 | 647.00 | 470 | 305 | o | 1.25 | o | 115 | 80 | 370 | 305 | o | 1.25 | o | 40 | 35 | - | - | - | - | - | - | - | × | Comparative Example |
| 6 | 4.70 | 603.00 | 470 | 320 | o | 1.35 | o | 110 | 75 | 375 | 310 | o | 1.35 | o | 45 | 40 | - | - | - | - | - | - | - | × | Comparative Example |
| 7 | 4.75 | 617.00 | 470 | 318 | o | 1.15 | o | 120 | 100 | 360 | 305 | o | 1.15 | o | 0 | 0 | - | - | - | - | - | - | - | × | Comparative Example |
| 8 | 4.66 | 597.00 | 370 | 320 | o | 0.85 | × | 25 | 10 | 350 | 300 | o | 0.90 | × | 25 | 10 | - | - | - | - | - | - | - | × | Comparative Example |
| 9 | 4.68 | 565.00 | 390 | 320 | o | 0.95 | o | 35 | 15 | 410 | 350 | o | 0.85 | × | 35 | 15 | - | - | - | - | - | - | - | × | Comparative Example |
| 10 | 4.73 | 542.00 | 470 | 310 | o | 1.35 | o | 115 | 100 | 470 | 310 | o | 1.35 | o | 115 | 100 | - | - | - | - | - | - | - | o | Inventive Example |
| 11 | 4.71 | 592.00 | 470 | 330 | o | 0.80 | × | 105 | 75 | 470 | 330 | o | 0.80 | × | 105 | 75 | - | - | - | - | - | - | - | × | Comparative Example |
| 12 | 4.74 | 615.00 | 470 | 200 | o | 2.20 | o | 35 | 15 | 470 | 200 | o | 2.20 | o | 40 | 20 | - | - | - | - | - | - | - | × | Comparative Example |
| 13 | 4.68 | 602.00 | 470 | 350 | o | 0.50 | × | 15 | 5 | 470 | 350 | o | 0.50 | × | 15 | 5 | - | - | - | - | - | - | - | × | Comparative Example |
| 14 | 4.72 | 590.00 | 370 | 280 | o | 0.95 | o | 85 | 65 | 370 | 280 | o | 0.95 | o | 85 | 60 | - | - | - | - | - | - | - | o | Inventive Example |
| 15 | 4.73 | 508.00 | 390 | 290 | o | 1.05 | o | 95 | 80 | 390 | 290 | o | 1.05 | o | 95 | 80 | - | - | - | - | - | - | - | o | Inventive Example |
| 16 | 4.70 | 608.00 | 370 | 270 | o | 0.95 | o | 85 | 65 | 370 | 270 | o | 0.95 | o | 85 | 60 | - | - | - | - | - | - | - | o | Inventive Example |
| 17 | 4.72 | 503.00 | 390 | 275 | o | 1.10 | o | 90 | 80 | 390 | 275 | o | 1.10 | o | 90 | 80 | - | - | - | - | - | - | - | o | Inventive Example |
| 18 | 4.68 | 614.00 | 470 | 280 | o | 1.40 | o | 120 | 100 | 470 | 280 | o | 1.40 | o | 120 | 100 | - | - | - | - | - | - | - | o | Inventive Example |
| 19 | 4.72 | 603.00 | 470 | 300 | o | 1.05 | o | 125 | 95 | 470 | 300 | o | 1.05 | o | 125 | 110 | 470 | 300 | o | 1.05 | o | 125 | 110 | o | Inventive Example |
| 20 | 4.74 | 618.00 | 470 | 280 | o | 1.20 | o | 0 | 0 | 470 | 280 | o | 1.20 | o | 0 | 0 | - | - | - | - | - | - | - | × | Comparative Example |
| 21 | 4.70 | 502.00 | 360 | 305 | o | 0.85 | × | 75 | 55 | 360 | 305 | o | 0.85 | × | 75 | 55 | - | - | - | - | - | - | - | × | Comparative Example |
| 22 | 4.72 | 506.00 | 380 | 320 | o | 0.95 | o | 75 | 58 | 380 | 320 | o | 0.95 | o | 75 | 58 | - | - | - | - | - | - | - | × | Comparative Example |
| 23 | 4.35 | 620.00 | 470 | 290 | o | 1.60 | o | 115 | 90 | 470 | 290 | o | 1.60 | o | 115 | 90 | - | - | - | - | - | - | - | o | Inventive Example |
| 24 | 5.75 | 631.00 | 470 | 440 | o | 1.20 | o | 150 | 98 | 470 | 440 | o | 1.20 | o | 150 | 130 | - | - | - | - | - | - | - | o | Inventive Example |
| 25 | 5.25 | 611.00 | 470 | 350 | o | 1.50 | o | 135 | 95 | 470 | 350 | o | 1.50 | o | 135 | 115 | - | - | - | - | - | - | - | o | Inventive Example |
| 26 | 4.53 | 615.00 | 470 | 280 | o | 1.25 | o | 120 | 95 | 470 | 280 | o | 1.25 | o | 120 | 95 | - | - | - | - | - | - | - | o | Inventive Example |
| 27 | 5.40 | 607.00 | 470 | 380 | o | 1.55 | o | 130 | 97 | 470 | 380 | o | 1.55 | o | 130 | 120 | - | - | - | - | - | - | - | o | Inventive Example |
| 28 | 4.74 | 598.00 | 370 | 280 | o | 1.05 | o | 95 | 80 | 370 | 280 | o | 1.05 | o | 95 | 80 | - | - | - | - | - | - | - | o | Inventive Example |
| 29 | 4.73 | 510.00 | 390 | 280 | o | 1.15 | o | 100 | 85 | 390 | 280 | o | 1.15 | o | 100 | 85 | - | - | - | - | - | - | - | o | Inventive Example |
| 30 | 4.82 | 587.00 | 470 | 280 | o | 1.60 | o | 145 | 96 | 470 | 280 | o | 1.60 | o | 145 | 125 | - | - | - | - | - | - | - | o | Inventive Example |
| 31 | 4.69 | 506.00 | 390 | 260 | o | 1.25 | o | 100 | 90 | 390 | 260 | o | 1.25 | o | 100 | 90 | - | - | - | - | - | - | - | o | Inventive Example |
| 32 | 4.69 | 589.00 | 470 | 300 | o | 1.40 | o | 125 | 100 | 470 | 300 | o | 1.40 | o | 125 | 100 | - | - | - | - | - | - | - | o | Inventive Example |
| 33 | 4.68 | 601.00 | 470 | 300 | o | 1.40 | o | 125 | 100 | 470 | 300 | o | 1.40 | o | 125 | 100 | - | - | - | - | - | - | - | o | Inventive Example |
| 34 | 4.70 | 603.00 | 470 | 300 | o | 1.45 | o | 140 | 100 | 375 | 290 | o | 1.40 | o | 95 | 60 | - | - | - | - | - | - | - | o | Inventive Example |

*1. Formula (2): Width (mm) of softened portion of heat-affected zone > nugget diameter (mm) × 0.2
*2. Formula (3): X (HV) < hardness (HV) of base material of high strength steel sheet × 0.95

As is clear from Table 3, in the Inventive Examples, the amount of hydrogen entering from the use environment could be reduced, and good welded joints having good delayed fracture resistance were obtained. However, in the Comparative Examples, good welded joints could not be obtained.

Reference Signs List

1   lower steel sheet
2   upper steel sheet
3   nugget
4   lower electrode
5   upper electrode
6   heat-affected zone
6a  softened portion
7   faying surface
8   tack weld point
9   weld point
10  spacer

**Claims**

1.  A resistance spot welded joint comprising a weld formed by resistance-spot-welding a sheet set including two or more overlapping steel sheets including at least one high strength steel sheet,

    wherein the high strength steel sheet has a chemical composition containing, in mass %,

    C: 0.10 to 0.40%,
    Si: 0.10 to 2.50%,
    Mn: 1.0 to 5.0%,
    P: 0.020% or less,
    S: less than 0.010%,
    Al: 0.10% or less, and
    N: 0.010% or less, and

    further containing
    one or two or more selected from

    Nb: 0.10% or less,
    Ti: 0.10% or less, and
    V: 0.20% or less,
    with the balance being Fe and incidental impurities,

    wherein Nb, Ti, and V satisfy a relation of formula (1),
    wherein the weld includes a nugget and a heat-affected zone,
    wherein, when a region in the heat-affected zone that has a hardness equal to or less than a hardness of a base material of the high strength steel sheet is defined as a softened portion, a diameter of the nugget and a width of the softened portion of the heat-affected zone satisfy a relation of formula (2),
    wherein, when a hardness of a softest portion of the heat-affected zone is denoted by X, the hardness X of the softest portion and the hardness of the base material of the high strength steel sheet satisfy a relation of formula (3), and
    wherein a total average number density of NbC, TiC, and VC particles having a diameter of 100 nm or less and present in the heat-affected zone is 80 particles/$\mu m^2$ or more:

$$([\text{Nb}] + [\text{Ti}] + [\text{V}] / 5) \geq 0.01\%, \qquad (1)$$

Width (mm) of softened portion of heat-affected zone > diameter (mm) of nugget $\times$ 0.2,          (2)

X (HV) < hardness (HV) of base material of high strenght steel sheet $\times$ 0.95,          (3)

where element symbols in formula (1) represent the contents (% by mass) of respective elements in the high strength steel sheet, and the content of an element is 0 when the element is not contained.

2. The resistance spot welded joint according to claim 1, wherein the chemical composition contains one or two or more selected from Nb: 0.08% or less, Ti: 0.08% or less, and V: 0.16% or less, and wherein a lower limit of formula (1) is 0.04%.

3. The resistance spot welded joint according to claim 1 or 2, wherein the high strength steel sheet further contains, in mass %, one or two or more selected from

Mo: 0.500% or less,
Cr: 0.300% or less,
Ca: 0.0200% or less,
Sb: 0.200% or less,
B: 0.0100% or less,
Cu: 1.00% or less, and
Ni: 0.50% or less, in addition to the chemical composition.

4. The resistance spot welded joint according to any one of claims 1 to 3, wherein the high strength steel sheet includes a metal coated layer.

5. The resistance spot welded joint according to any one of claims 1 to 4, wherein the high strength steel sheet has a tensile strength of 980 MPa or more.

6. A resistance spot welding method for producing the resistance spot welded joint according to any one of claims 1 to 5,

the method comprising: holding, between a pair of welding electrodes, the sheet set including the two or more overlapping steel sheets including the at least one high strength steel sheet; and energizing the sheet set under application of welding force to join the steel sheets together,
wherein the energizing includes a primary energization step and a secondary energization step,
wherein the method further comprises a cooling step between the primary energization step and the secondary energization step,
wherein, in the secondary energization step, energization is performed with a welding force F2 of 2.0 to 7.0 kN at a current value $I_2$ that satisfies a relation of formula (4) with a current value $I_1$ in the primary energization step for an energization time $t_2$ represented by formula (5):

$$0.6 \times I_1 < I_2 < 1.0 \times I_1, \qquad (4)$$

$$2100 - 8200 \times ([Nb] + [Ti] + [V] / 5) < t_2, \qquad (5)$$

wherein, in formulas (4) and (5),

$I_1$: the current value (kA) in the primary energization step,
$I_2$: the current value (kA) in the secondary energization step, and
$t_2$: the energization time (ms) in the secondary energization step,
wherein element symbols in formula (5) represent the contents (% by mass) of respective elements in the high strength steel sheet, and the content of an element is 0 when the element is not contained, and wherein, when the at least one high strength steel sheet includes two or more high strength steel sheets, the value of ([Nb] + [Ti] + [V] / 5) in formula (5) is an average of values calculated for the two or more high strength steel sheets.

7. The resistance spot welding method according to claim 6, wherein, in the cooling step, a non-energization state is maintained for 500 ms or longer and shorter than 2000 ms.

## FIG. 1

## FIG. 2

HARDNESS DISTRIBUTION IN WELD

# FIG. 3

# FIG. 4

# FIG. 5

(A)

(B)

<div align="center">**INTERNATIONAL SEARCH REPORT**</div>

| | International application No. |
|---|---|
| | **PCT/JP2023/002741** |

| A. | CLASSIFICATION OF SUBJECT MATTER |
|---|---|

***B23K 11/11***(2006.01)i; ***B23K 11/16***(2006.01)i; ***B23K 11/24***(2006.01)i; ***C22C 38/00***(2006.01)i; ***C22C 38/14***(2006.01)i; ***C22C 38/60***(2006.01)i
FI: B23K11/11 540; B23K11/16 311; B23K11/24 315; C22C38/00 301U; C22C38/14; C22C38/60

According to International Patent Classification (IPC) or to both national classification and IPC

| B. | FIELDS SEARCHED |
|---|---|

Minimum documentation searched (classification system followed by classification symbols)

B23K11/11; B23K11/16; B23K11/24; C22C38/00; C22C38/14; C22C38/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2021/162101 A1 (NIPPON STEEL CORP) 19 August 2021 (2021-08-19)<br>entire text, all drawings | 1-7 |
| A | WO 2011/025015 A1 (NIPPON STEEL CORPORATION) 03 March 2011 (2011-03-03)<br>entire text, all drawings | 1-7 |
| A | WO 2013/114850 A1 (JFE STEEL CORPORATION) 08 August 2013 (2013-08-08)<br>entire text, all drawings | 1-7 |
| A | WO 2012/141290 A1 (NIPPON STEEL CORPORATION) 18 October 2012 (2012-10-18)<br>entire text, all drawings | 1-7 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 March 2023** | **04 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/002741**

| Patent document cited in search report | | | Publication date (day/month/year) | Patent family member(s) | | | Publication date (day/month/year) |
|---|---|---|---|---|---|---|---|
| WO | 2021/162101 | A1 | 19 August 2021 | KR 10-2022-0124766 | | A | |
| | | | | entire text, all drawings | | | |
| | | | | CN 115103923 | | A | |
| WO | 2011/025015 | A1 | 03 March 2011 | US 2015/0001188 | | A1 | |
| | | | | entire text, all drawings | | | |
| | | | | KR 10-2012-0038512 | | A | |
| | | | | CN 102625740 | | A | |
| WO | 2013/114850 | A1 | 08 August 2013 | US 2015/0017472 | | A1 | |
| | | | | entire text, all drawings | | | |
| | | | | CN 104093873 | | A | |
| | | | | KR 10-2014-0116936 | | A | |
| WO | 2012/141290 | A1 | 18 October 2012 | US 2014/0014237 | | A1 | |
| | | | | entire text, all drawings | | | |
| | | | | CN 103459648 | | A | |
| | | | | KR 10-2013-0133046 | | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019072764 A
- WO 2014171495 A

- JP 2018144098 A